Europäisches Patentamt

European Patent Office

Office européen des brevets

(11) Veröffentlichungsnummer: **0 137 003**
**B1**

(12) **EUROPÄISCHE PATENTSCHRIFT**

(45) Veröffentlichungstag der Patentschrift:
27.04.88

(21) Anmeldenummer: **84900614.3**

(22) Anmeldetag: **03.02.84**

(86) Internationale Anmeldenummer:
**PCT/DE 84/00029**

(87) Internationale Veröffentlichungsnummer:
**WO 84/03134 (16.08.84 Gazette 84/20)**

(51) Int. Cl.⁴: **F 16 M 11/04**

(54) **VORRICHTUNG ZUR AUFNAHME EINES TERMINALS ODER ÄHNLICHER BÜROGERÄTE.**

(30) Priorität: **08.02.83 DE 3304217**

(43) Veröffentlichungstag der Anmeldung:
**17.04.85 Patentblatt 85/16**

(45) Bekanntmachung des Hinweises auf die Patenterteilung:
**27.04.88 Patentblatt 88/17**

(84) Benannte Vertragsstaaten:
**CH DE FR GB LI NL SE**

(56) Entgegenhaltungen:
**EP-A-0 041 804**
**EP-A-0 070 337**
**GB-A-837 404**

(73) Patentinhaber: **Siemens Aktiengesellschaft Berlin
und München, Wittelsbacherplatz 2, D-8000
München 2 (DE)**

(72) Erfinder: **GÖTZ, Werner, Wastl- Witt- Strasse 7,
D-8000 München 21 (DE)**

## Beschreibung

Die Erfindung betrifft eine Vorrichtung gemäß dem Oberbegriff des Patentanspruches 1.

Bei der Arbeit an einem Terminal, wie es z.B. ein Datensichtgerät oder ähnliches darstellt, ist man bestrebt, das Terminal in einer Lage aufzustellen, in der bieispielsweise in Bezug auf Blickrichtung, Entfernung und Reflektion von Fremdlicht möglichst wenig störende Einflüsse auf eine Bedienperson ausgeübt werden.

Aus der DE-A-2 847 135 ist es bekannt, eine Datensichtgerät auf einer Tragevorrichtung aufzustellen. Diese besteht aus einem Basisteil mit darauf gelagertem Drehring, auf welchem an einer horizontal verlaufenden Welle ein Stützarm zu Höhenverstellung angebracht ist. An seinem freien Ende befindet sich ein schwenkbarer Stützarm zum Tragen des Datensichtgerätes, der mittels einer im Stützarm angeordneten Parallelführung bei einer Höhenverstellung immer eine parallele Lage des Datensichtgerätes zu sich selber gewährleistet. Außerdem weist die Trage vorrichtung eine Gewichtsausgleichseinrichtung auf, durch welche das von dem Gewicht des Datensichtgerätes und des Stützarmes auf diesen bezüglich seiner ersten Achse ausgeübten Drehmoment in jeder Stellung des Stützarmes mindestens annähernd kompensiert wird. Die Gewichtsausgleichseinrichtung wird von einer Torsionsfeder gebildet, die in der Gelenkverbindung zwischen dem Stützarm und dem Drehring angeordnet ist und die erste Achse koaxial umgibt.

Die Ausbildung der Gewichtsausgleichseinrichtung als Torsionsfeder, welche in der Gelenkverbindung angeordnet ist, hat jedoch den Nachteil, daß der mit einer Vorspannung der Torsionsfeder verbundene Einbau mit wachsender Federkraft der Torsionsfeder schwierig zu handhaben ist. Torsionsfedern mit kleiner Federkraft schließen jedoch den Einsatz der Tragevorrichtung für größe Datensichtgeräte aus. Die Höhenverstellung mit dem Stützarm hat den Nachteil, sich die Lage des Schwerpunktes bei höherer Verstellung ändert, so daß ein relativ großes bzw. schweres Basisteil eingesetzt werden muß. Da die Torsionsfeder keinen linearen Kraftgang aufweist, muß die Höheneinstellung abhängig von der Höhe mit unterschiedlicher Kraft erfolgen. Der gesamte Aufbau ist dabei relativ kompliziert und schwierig.

Es ist weiters aus der EP-B-0 041 804 eine Vorrichtung zur lösbaren Aufnahme eines Terminals bekannt, die eine, das Terminal aufnehmende kalottenartig ausgeformte Trägerplatte enthält, die dreh- und schwenkbar auf einem Trägerelemente angeordnet ist und einen Verschwenkungsschlitz zur Aufnahme eines dem Trägerelement zugeordneten Halteelement aufweist. Als Halteelement dient dabei eine Schraubverbindung.

Aufgabe der Erfindung ist es, eine Vorrichtung der eingangs genannten Art so auszugestalten, daß sie in einfacher Weise ohne Schraubverbindungen, aus Kunststoffteilen zusammengesetzt werden kann und daß trotzdem eine leichte Verstellung des Terminals möglich ist.

Diese Aufgabe wird bei einer Vorrichtung der eingangs genannten Art gemäß dem kennzeichnen den Teil des ersten Patentanspruches gelöst.

Weitere vorteilhafte Ausführungs formen der Erfindung sind in den Unteransprüchen gekennzeichnet.

Dadurch daß sämtliche Elemente der Vorrichtung aus Kunststoffelementen bestehen, die über Rastelemente untereinander verbunden sind, ergibt sich eine einfache und kostengünstige Konstruktion der gesamten Vorrichtung. Dabei stehen sämtliche Einzelemente miteinander in Formschluß, woraus eine spiel freie Verstellbarkeit der gesamten Vorrichtung resultiert.

Drei der das Trägerelement bildenden zylindrischen Kunststoffdruckgußteile, nämlich das Aufsatzstück, das Basisstück und das Verstellstück sind mit Gewinde bzw. Gewindeansätzen versehen und zwar in der Weise, daß eine linksgängige und rechtsgängige Gewindepaarung zusammenspielt. Ein das Aufsatzstück mit dem Basisstück verdrehsicher verbindendes Drehsicherungselement verhindert ein unbeabsichtigtes Verstellen und Verdrehen der Elemente zueinander. Durch Verdrehen des mittleren zylindrischen Verstellstückes, das mit einem Griffring versehen ist, wird das säulenartige Trägerelement in der Höhe verstellt.

Das Terminal selbst liegt über eine kalottenartig ausgeformte den Boden des Terminalgehäuses bildende Trägerplatte mit einem Verschwenkschlitz, in den ein Halteelement eingreift auf einem Kragenteil des Aufsatzstückes auf, so daß das Terminal gedreht und geneigt werden kann.

Durch die Verwendung eines den Verschwenkschlitz abdeckenden Trägerelementes, das ein von außen betätigbares federndes Rastelement aufweist, welches gleichzeitig als Verdrehanschlag dient, wird eine besonders exakte und sichere Führung des Terminals auf dem eigentlichen säulenartigen aus Einzelelementen aufgebauten Trägerelement erreicht.

Durch die leichte Lösbarkeit der als integrierter Bestandteil des Terminalgehäuses ausgebildeten kalottenartigen Trägerplatte von dem Trägerelement über das Gleitelement bzw die von außen betätigbare Zunge, kann das Terminal schnell mit verschiedenen Trägerelementen ausgerüstet werden, z. B. mit Trägerelementen mit verstellbarer Höhe oder mit sehr kurzen Trägerelementen, die in ihrem unteren Bereich Rastelemente aufweisen, mit denen das Trägerelement und damit das ganze Terminal auf den eigentlichen, dem Terminal zugeordneten Bürogerät aufgesetzt oder aber auf einer besonderen Bodenplatte verrastet werden kann. Das Terminal läßt sich dabei über durch Betätigen des von außen über den Verdrehschlitz zugänglichen Zunge des Gleitelementes samt der Trägerplatte (Gehäuseboden) von dem sockelartigen Trägerelement abheben.

Ausführungsformen der Erfindung sind in den Zeichnungen dargestellt und werden im folgenden beispielsweise näher beschrieben. Es zeigen:

Fig. 1 die Aufnahmevorrichtung teilweise in Schnittdarstellung in ausgefahrenem Zustand,

Fig. 2 die Aufnahmevorrichtung in eingefahrenem Zustand teilweise in Schnittdarstellung,

Fig. 3 die Aufnahmevorrichtung in ausgefahrenem Zustand unter Verwendung eines Verstellstückes mit beidseitig angeordneten Gewinden,

Fig. 4 eine Schnittdarstellung der Aufnahmevorrichtung mit zugehörigem Gleitelement,

Fig. 5 eine Ansicht der Aufnahmevorrichtung von oben bei abgenommenem Terminalboden und

Fig. 6 eine Schnittdarstellung der Führung des Gleitelementes in der Trägerplatte.

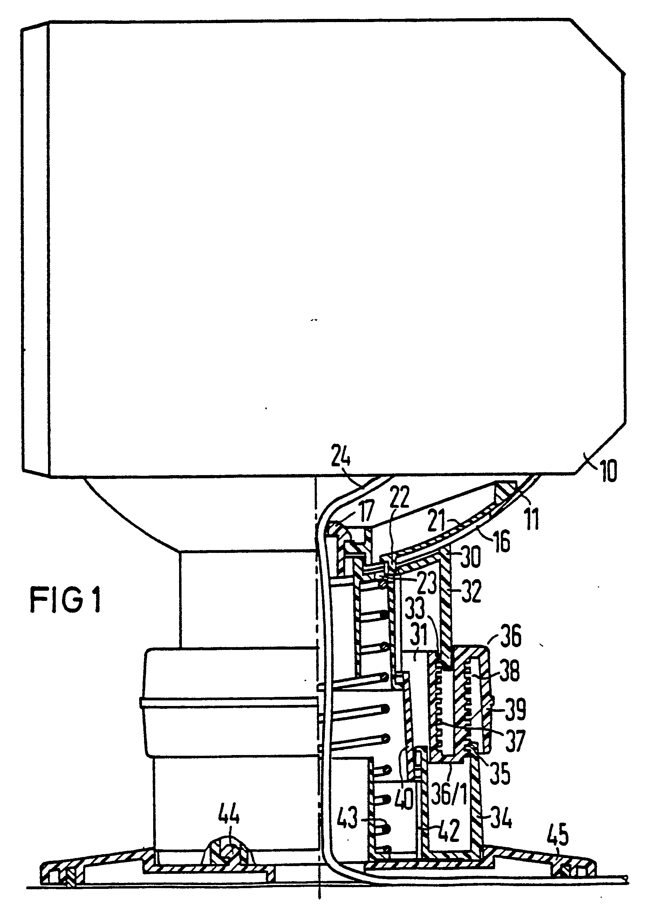

Die Fig. 1 zeigt die Anordnung eines Datensichtgerätes 10 auf der Aufnahmevorrichtung. Die Aufnahmevorrichtung enthält dabei ein Trägerelement, das im wesentlichen aus drei Teilen besteht, nämlich einem oberen, das Terminal 10 aufnehmenden Aufsatzstück 32 mit einem innen angeordneten ersten Gewindeansatz 33, der rechtsgängig ausgebildet ist. Weiters einem unteren zylindrischen Basisstück 34 mit darauf angeordneten, ebenfalls innen liegenden zweiten Gewindeansatz 35, der linksgängig ausgebildet ist. Zwischen dem oberen Aufsatzstück 32 und dem unteren Basisstück 34 befindet sich ein mittleres zylindrisches Verstellstück 36. Das Verstellstück 36 enthält ein Gewinndestück 36/1 aus einem rotationssymmetrischen, einen zentralen Durchbruch 31 aufweisenden Körper. Es weist ein erstes 37 mit dem ersten Gewindeansatz 33 zusammenwirkendes Gewinde und ein zweites mit dem zweiten Gewindeansatz 35 zusammenwirkendes Gewinde 38 auf, wobei die Gewinde zueinander gegenläufig verlaufen. Die die Gewinde 37 und 38 tragenden, konzentrisch zur Drehachse verlaufenden Wandbereiche des Gewindestückes 36/1 haben eine U-förmige Querschnittsstruktur, wobei jeweils ein Gewinde auf einer Seitenflanke der U-förmigen Querschnittsstruktur angeordnet ist. Verbunden mit dem Gewinde und einstückig mit ihm ausgebildet ist zum Verstellen des Gewindestückes 36 ein Griffstück 39 mit außen angeordnet er Riffelung angeordnet. Das Griffstück 39 verläuft dabei konzentrisch zu den Gewinden 37 und 38 und wird zusammen mit dem Gewindestück 36 als gemeinsames Element im Spritzgußverfahren hergestellt.

Durch drehen des außen liegenden Griffstückes 39 wird über das Gewindestück 36/1 eine teleskopartige Verschiebung des Aufsatzstückes 32 relativ zum Basisstück 34 bewirkt. Damit ist es möglich, durch einfaches Verdrehen des Griffstückes 39 und damit des Gewindestückes 36 teleskopartig das Aufsatzstück 32 und das Basisstück 34 ineinander zu verschieben und so die Höhenlage des Datensichtgerätes bzw. des Terminals zu verändern.

Um zu verhindern, daß sich das Aufsatzstück 32 und das Basisstück 34 beim Drehen des Griffstückes 39 zueinander verdrehen, befindet sich im Innern dieser höhenverstell baren Aufnahmevorrichtung ein zylindrisches Verdrehsicherungselement 40, das in Führung 41 und 42 des Aufsatzstückes 32 und des Basisstückes 34 geführt ist. Die Führungen 41 und 42 sind jeweils mit dem Aufsatzstück 32 bzw. dem Basisstück 34 einstückig verbunden, wobei die Führungen 41 und 42 als Nuten eines zylindrischen Teiles dieser Elemente ausgebildet sind.

Die Gewinde der einzelnen Elemente 32 und 34 sind hinsichtlich ihrer Steigerungen so ausgebildet, daß sie sich infolge des Gewichtes des Datensichtgerätes nicht selbständig zueinander verstellen können. Trotzdem kann bei einer entsprechenden Auslegung der Steigerung eine einmalige Umdrehung des Griffstückes 39 ausreichend sein, den gesamten Stellbereich der Aufnahmevorrichtung zu durchfahren.

Die Anordnung enthält noch ein als Spiralfederelement ausgebildetes Federelement 43 zwischen dem Aufsatzstück 32 und dem Basisstück 34.

Mit dem Basisstück 34 über Rastverbindungen 44 verbunden ist eine scheibenförmige Bodenplatte 45. Das Federelement erleichtert das Verdrehen des Griffstückes 39, da dieses Federelement 43 einen Teil des Gewichtes des Datensichtgerätes aufnimmt.

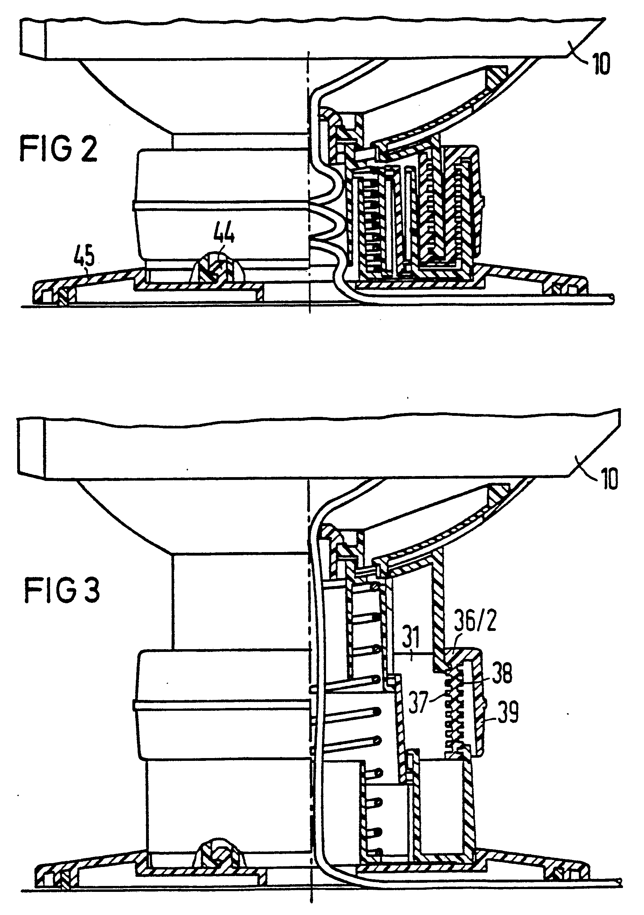

Neben der getrennten Anordnung der Gewinde 37 und 38 des Gewindestückes 36 ist auch eine Ausführungsform möglich, wie sie in der Fig. 3 dargestellt ist, bei der das Gewindestück aus einem rotationssymmetrischen Körper 36/2 mit zentralem Durchbruch 31 besteht, dessen die Gewinde 37 und 38 tragenden Bereiche konzentrisch zur Drehachse verlaufen und Elemente eines Hohlzylinders bilden, auf dessen Innen- und Außenflächen die Gewinde angeordnet sind.

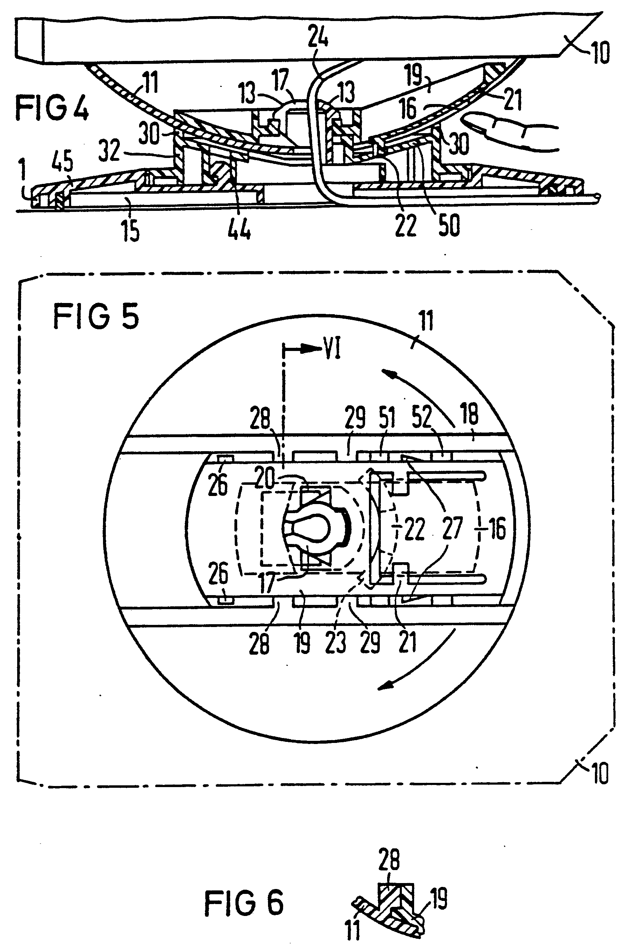

Eine besondere Ausgestaltung (Fig. 4) des oberen Teiles des Aufsatzstückes 32 in Form eines zylindrischen umlaufenden Kragenteiles 30 ermöglicht die verdreh- und verschwenkbare Aufnahme einer kalottenartig ausgeformten Trägerplatte 11. Die Trägerplatte 11 bildet dabei den Gehäuseboden des Terminals 10 und ist integrierter Bestandteil des Terminalgehäuses.

Um die Verschwenk und Verdrehbarkeit zwischen dem Terminalboden 11 und dem Aufsatzstück 32 zu ermöglichen, weist die Trägerplatte 11 einen länglichen Verschwenkschlitz 16 auf, durch den ein als Haltenase 17 ausgebildetes Halteelement hindurchgreift. Zwischen den Vorsprüngen der Haltenase 17 und der Trägerplatte 11 ist ein verdrehsicher in Führungen 18 (Rippen) der Trägerplatte 11 geführtes, den Verschwenkschlitz 16 abdecken des Gleitelement 19 angeordnet. Das Gleitelement 19 weist dabei eine Verriegelungsöffnung 20 auf, die zur Aufnahme der Haltenase 17 ausgebildet ist und mit dieser Haltenase 17 in der Art eines Bajonettverschlusses zusammenarbeitet, so daß wie später näher erläutert wird, durch Drehen aus der in der Fig. 5 dargestellten Verriegelungsposition in eine um 90° dazu verdrehte Position die Trägerplatte 11 und damit das Terminal 10 von der Haltenase 17 abgenommen werden kann.

Zum Sichern des Gleitelementes 19 in der Führung 18 weist das Gleitelement Rastanschläge 26 und Rastnasen 27 auf, die mit entsprechenden als angespritzte Rippen der Führung 18 ausgebildete Rastanschlägen 28, 29 zusammenarbeitet.

Um das Einsetzen des Gleitelementes 19 in die Führungen 18 zu erleichtern sind am Gleitelement 19 entsprechend den Rastanschlägen 28, 29 ausgebildete Öffnungen 51 und 52 ausgebildet. Beim Zusammenbau wird das Gleitelement 19 über die Öffnungen 51 und 52 in die Führung 18 gesteckt und dann durch seitliches Verschwenken die Rastnasen 27 hinter dem Anschlag 29 verrastet.

Zur Sicherung der Verbindung zwischen der Haltenase 17 und der Trägerplatte 11, ist in dem Gleitelement 19 ein federndes Rastelement 21 ausgebildet, das durch den Verschwenkungsschlitz 16 mit einer Anschlagnase 22 in einen auf einer Schräge 50 des Trägerelementes 12 angeordneten halbkreisförmigen Schlitz 23 eingreift. Der Schlitz 23 dient dabei mit seinen seitlichen Begrenzungen als Anschlagbegrenzung beim Verdrehen der Trägerplatte 11 um damit zu verhindern, daß die durch das Zentrum des Aufsatzstückes 32 und durch eine Zentralöffnung der Haltenase 17 geführte Zuleitung 24 abgeschert werden kann.

Um das Terminal 10 mit seiner Bodenplatte (Trägerplatte 11) von dem Aufsatzstück 32 abheben zu können wird das als federnde Rastzunge ausgebildete Rastelement 21 von außen durch den Verschwenkschlitz 16 angehoben und damit die Anschlagnase 22 aus dem Schlitz 23 ausgehoben. Damit läßt sich entsprechend den dargestellten Pfeilrichtungen das Terminal 10 zusammen mit dem Gleitelement 19 um die Haltenase 17 verdrehen, bis die Verriegelungsöffnung 20, die in der Art einer Bajonettverriegelung mit der Haltenase 17 zusammenarbeitet, die Haltenase 17 freigibt. Dann läßt sich das Terminal 10 samt der kalottenartig den Boden des Terminals 10 bildenden Trägerplatte 11 von dem als Führung für die Trägerplatte 11 dienenden Kragen 30 des zylinderförmigen Aufsatzstückes 32 abheben, und es kann das Terminal auf ein anderes, z. B. entsprechend der Figur ausgebildetes Aufsatzstück niederer Höhe aufgesetzt werden.

Die Haltenase 17 weist an ihrem oberen Teil Führungsschrägen 13 auf, die beim Aufsetzen des Terminals auf das Aufsatzstück 32 das zwischen Anschlägen 26, 27, 28, 29 verschiebliche Gleitelement 19 hinsichtlich seiner Verriegelungsöffnung zentrieren.

Bei dem in der Fig. 4 dargestellten Aufsatzstück 32 wurde für die gesamte Vorrichtung auf die Höhenverstellbarkeit verzichtet, wobei dieses hinsichtlich seiner Höhe kurze und einstückig ausgebildete sockelartige Aufsatzstück 32 ebenfalls über Rastverbindungen 44 mit der scheibenförmigen Bodenplatte 45 verbindbar ist.

Anstelle der Bodenplatte 45 können die Rastverbindungen 44 auch direkt einem Gerät zugeordnet sein, so daß das Terminal entweder über das einstückig ausgebildete. Trägerelement 12 oder über die höhenverstellbare Aufnahmevorrichtung entsprechend den Fig. 1 bis 3 direkt auf das Gerät aufsetzbar ist.

**Patentansprüche**

1. Vorrichtung zur Aufnahme eines Terminals (10) oder einem ähnlichen Bürogerät, gekennzeichnet durch ein oberes, das Terminal aufnehmende Aufsatzstück (32) mit darauf angeordnetem ersten Gewindeansatz (33), ein unteres Basisstück (34) mit darauf angeordnetem zweiten Gewindeansatz (35), ein mittleres Verstellstück (36), das ein Gewindestück (36/1) mit einem ersten, mit dem ersten Gewindeansatz (33) zusammenwirkendes Gewinde (37) und einem zweiten, mit dem zweiten Gewindeansatz (35) zusammen wirken des Gewinde (38) aufweist, wobei die Gewinde (37, 38) zueinander gegenläufig verlaufen, und das ein mit dem Gewindestück (36) verbundenes, außen liegendes Griffstück (39) aufweist, so daß durch Drehen des Griffstückes (39) über das Gewindestück (36) eine teleskopartige Verschiebung des Aufsatzstückes (32) relativ zum Basistück (34) erfolgt, und ein das Aufsatzstück (32) mit dem Basisstück (34) verdrehsicher verbindendes Drehsicherungselement (40).

2. Vorrichtung nach Anspruch 1, dadurch gekennzeichnet, daß das Gewindestück (36/1) aus einem rotationssymmetrischen, einen zentralen Durchbruch (31) aufweisen den Körper besteht, dessen die Gewinde tragenden, konzentrisch zur Drehachse verlaufenden Wandbereiche eine U-förmige Querschnittsstruktur haben, wobei jeweils ein Gewinde (37, 38) auf einer Seitenflanke der U- förmigen Querschnittsstruktur angeordnet ist.

3. Vorrichtung nach Anspruch 1,

dadurch gekennzeichnet, daß das Gewindestück aus einem rotationssymmetrischen Körper (36/2) mit zentralem Durchbruch (31) besteht, dessen die Gewinde tragenden Bereiche konzentrisch zur Drehachse verlaufen und Elemente eines Hohlzylinders bilden, auf dessen Innen- und Außenflächen die Gewinde (36, 38) angeordnet sind.

4. Vorrichtung nach einem der Ansprüche 2 oder 3, dadurch gekennzeichnet, daß das Griffstück (39) aus einem mit dem Gewindestück (36/1, 36/2) verbundenen, konzentrisch zu diesem verlaufenden Element besteht.

5. Vorrichtung nach einem der Ansprüche 1 bis 4, dadurch gekennzeichnet, daß das Griffstück (39) und das Gewindestück (36) aus einem einzigen Element besteht.

6. Vorrichtung nach einem der Ansprüche 1 bis 5, dadurch gekennzeichnet, daß zwischen dem Aufsatzstück (32) und dem Basisstück (34) ein das Gewicht des Terminals teilweise aufnehmendes Federelement (43) angeordnet ist.

7. Vorrichtung nach einem der Ansprüche 1 bis 6, dadurch gekennzechnet, daß das Aufsatzstück (32) selbst als Trägerelement säulenartig ausgestaltet ist und zur Verwendung ohne Verstellstück (36) und Basisstück (34) an seinem unteren Ende Rastelemente (44) zum lösbaren Verbinden des Aufsatzstückes (32) mit entsprechenden Rastverbindungen einer Bodenplatte (45) oder einem dem Terminal zugeordneten Gerät aufweist.

8. Vorrichtung nach einem der Ansprüche 1 bis 7, dadurch gekennzeichnet, daß auf dem Aufsatzstück (32, 12) eine kalottenartig ausgeformte, dreh- und schwenkbar ausgestaltete Trägerplatte (12) lösbar angeordnet ist, die zum horizontalen Verschwenken einen Schlitz (16) aufweist, in die ein dem Aufsatzstück (32, 12) zugeordnetes Halteelement (17) eingreift.

9. Vorrichtung nach Anspruch 8, dadurch gekennzeichnet, daß die Trägerplatte (11) integrierter Bestandteil des Terminalgehäuses ist.

10. Vorrichtung nach Anspruch 8 oder 9, dadurch gekennzeichnet, daß das zwischen dem durch den Verschwenkschlitz (16) der Trägerplatte (11) greifenden Halteelement (17) und der Trägerplatte (11) ein verdrehsicher in Führungen (18) der Trägerplatte geführtes, den Verschwenkschlitz (16) abdeckendes, über eine Verriegelungsöffnung (20) das Halteelement (17) lösbar aufnehmendes Gleitelement (19) angeordnet ist, das ein federndes von außen durch den Verschwenkschlitz (16) zugängliches Rastelement (21) aufweist, das durch den Verschwenkschlitz (16) zwischen Anschläge (23) des Aufsatzstückes (32) eingreift, wobei das Halteelement (17) in der Art einer Bajonettverriegelung ausgebildet ist, so daß zum Lösen der Trägerplatte (11) und damit des Terminals (10) von dem Aufsatzstück (32, 12) nach Ausheben des Rastelementes (21, 22) aus dem Anschlagbereich (23) durch Betätigung durch den Verschwenkschlitz (16) die Trägerplatte (11) aus einer Rastposition in eine das Halteelement (17) und damit das Gleitelement (19) freigebende Position verschwenkbar ist.

11. Vorrichtung nach Anspruch 10, dadurch gekennzeichnet, daß das Rastelement (21) als Teil einer dem Gleitelement (19) zugeordneten Rastzunge ausgebildet ist.

12. Vorrichtung nach einem der Ansprüche 10 oder 11, dadurch gekennzeichnet, daß die Anschläge (23) als Begrenzungen einer das Rastelement (22) aufnehmen den halbkreisförmigen Rastöffnung (23) ausgebildet sind.

13. Vorrichtung nach einem der Ansprüche 8 bis 12, dadurch gekennzeichnet, daß das als Haltenase ausgebildete Halteelemente (17) eine zenrale Durchgangsöffnung zur Aufnahme der Terminalzuleitung (34) aufweist.

14. Vorrichtung nach einem der Ansprüche 1 bis 13, dadurch gekennzeichnet, daß das Halteelemente (17) Führungsschrägen (13) aufweist, die beim Aufsetzen der Trägerplatte (11) samt Terminal (10) das Gleitelement (19) hinsichtlich seiner Verriegelungsöffnung (20) zentrieren.

15. Vorrichtung nach einem der Ansprüche 1 bis 14, dadurch gekennzeichnet, daß sämtliche Elemente der Vorrichtung aus Kunststoffspritzteilen ausgebildet sind.

**Bezugszeichenliste**

10   Terminal
32   Aufsatzstück
33   erster Gewindeansatz
34   Basisstück
35   zweiter Gewindeansatz
36   Verstellstück
36/1   Gewindestück
31   Durchbruch
37   erstes Gewinde
38   zweites Gewinde
39   Griffstück
40   Verdrehsicherungselement
41   Führungen
42   Führungen
43   Federelement
44   Rastverbindungen
36/2   rotationssymmetrischer Körper
      (Gewindestück)
30   Kragenteil
11   Trägerplatte
13   Führungsschrägen der Haltenase
16   Verschwenkschlitz
17   Haltenase
18   Führungen (Rippen)
19   Gleitelement
20   Verriegelungsöffnung
21   Rastelement
22   Anschlagnase
23   halbkreisförmiger Schlitz
24   Zuleitung
26   Rastanschlag
27   Rastnase
28   Rastanschlag
29   Rastanschlag
50   Schräge
51   Öffnungen
52   Öffnungen

**Claims**

1. A device to support a terminal (10) or a similar office machine, characterised by an upper mounting section (32) to accommodate the terminal with first raised section of thread (33) disposed on it, a lower base section (34) with a second raised section of thread (35) disposed on it, a central adjusting section (36) having exhibits a threaded section (36/1) with a first thread (37) cooperating with the first raised section of thread (33), and a second thread (38) cooperating with the second raised section of thread (35), the threads (37, 38) being of opposite hands, and which has an external gripping section (39) connected to the threaded section (36) so that a telescopic movement of the mounting section (32) in relation the the base section (34) is produced by means of the threaded section (36) by turning the gripping section (39), and by a rotation-inhibiting element (40) connecting the mounting section (32) to the base section (34) such that it cannot turn.

2. A device as claimed in Claim 1, <u>characterised in that</u> the threaded section (36/1) consists of a rotationally symmetrical body which exhibits a central opening (31) and the wall areas of which carrying the threads and running concentric with the axis of rotation have a U-shaped cross-sectional structure with a thread (37, 38) disposed on a side flank of the U-shaped cross-sectional structure in each case.

3. A device as claimed in Claim 1, <u>characterised in that</u> the threaded section consists of a rotationally symetrical body (36/2) with a central opening (31) the thread-carrying areas of which run concentric with the axis of rotation and form elements of the hollow cylinder with the threads (36, 38) disposed on its internal and external surfaces.

4. A device as claimed in one of Claims 2 or 3, <u>characterised in that</u> the gripping section (39) consists of an element which is connected to the threaded section (36/1, 36/2) and runs concentric with it.

5. A device as claimed in one of Claims 1 to 4, <u>characterised in that</u> the gripping section (39) and the threaded section (36) consist of a single element.

6. A device as claimed in one of Claims 1 to 5 <u>characterised in that</u> a spring element (43) taking part of the weight of the terminal is disposed between the mounting section (32) and the base section (34).

7. A device as claimed in one of Claims 1 to 6, <u>characterised in that</u> the mounting section (32) itself takes the form of a column-like carrier element and for use without an adjusting section (36) and base section (34) exhibits locking elements (44) disposed on its lower end for detachable connection of the mounting section (32) with corresponding locking connectors on the base plate (45) or a unit associated with the terminal.

8. A device as claimed in one of Claims 1 to 7, <u>characterised in that</u> the mounting section (32, 12) exhibits a detachable hemispherical carrier plate (11) which is designed so that it can turn and swivel and which for horizontal swivelling exhibits a slot (16) in which a holding element (17) associated with the mounting section (32, 12) engages.

9. A device as claimed in Claim 8, <u>characterised in that</u> the carrier plate (11) is an integral part of the housing.

10. A device as claimed in Claim 8 or 9, <u>characterised in that</u> a sliding element (19) which is guided so that it cannot turn in guides (18) on the carrier plate and covers the swivelling slot (16) and detachably accommodates the holding element (17) by means of a locking opening (20) is disposed between the holding element (17) engaging through the swivelling slot (16) of the carrier plate (11) and the carrier plate (11) and engages through the swivelling slot (16) between stops (23) on the mounting section (32), the holding element (17) being designed in the manner of a bayonet fixture so that in order to detach the carrier plate (11) and thus the terminal (10) from the mounting section (32, 12), the carrier plate (11) can be swivelled from a locking position into a position releasing the holding element (17) and thus the sliding element (19) after lifting the locking element (21, 22) from the stop area (23) by actuation through the swivelling slot (16).

11. A device as claimed in Claim 10, characterised in that the locking element (21) is designed as part of a locking tongue associated with the sliding element (19).

12. A device as claimed in one of Claims 10 or 11, characterised in that the stops (23) are designed as limits for a semi-circular locking opening (23) accommodating the locking element (22).

13. A device as claimed in one of Claims 8 to 12, characterised in that the holding element (17) in the form of a latch exhibits a central opening to accommodate a cable (34) to the terminal.

14. A device as claimed in one of Claims 1 to 13, characterised in that the holding element (17) exhibits guiding bevels (13) which centre the sliding element (19) with respect to its locking opening (20) when the carrier plate (11) and terminal (10) are mounted.

15. A device as claimed in one of Claims 1 to 14, characterised in that all the elements of the device are plastic injection mouldings.

**Revendications**

1. Dispositif pour recevoir un terminal (10) ou un appareil de bureau ou analogue, caractérisé par un organe supérieur de montage (32) comportant un premier embout fileté (33) ménagé sur l'organe de montage,
un élément de base inférieur (34) sur lequel est monté
un second embout fileté (35),
un organe médian de réglage (36),
qui comporte un organe fileté (36/1) possédant un premier filetage (37) coopérant avec le premier embout fileté (33), et un second filetage (38) coopérant avec le second embout fileté (35), les filetages (37, 38) étant réalisés avec des pas opposés, et
qui comporte un organe de préhension (39) relié à l'organe fileté (36) et situé a l'extérieur de sorte que, lorsque l'on fait tourner l'organe de préhension (39) sur l'organe fileté (36), il se produit un déplacement télescopique de l'organe de montage (32) par rapport à l'élément de base (34), et
un organe de blocage en rotation (40) reliant avec blocage en rotation l'organe de montage (32) à l'élément de base (34).

2. Dispositif suivant la revendication 1, caractérisé par le fait que l'organe fileté (36/1) est constitué par un corps à symétrie de révolution comportant un perçage central (31) et dont les zones marginales, qui portent les filetages et sont disposées concentriquement par rapport à l'axe de rotation, possèdent une structure en coupe transversale en forme de U, un filetage respectif (37, 38) étant situé un flanc latéral de la structure en coupe transversale en forme de U.

3. Dispositif suivant la revendication 1, caractérisé par le fait que l'organe fileté est constitué par un corps à symétrie de révolution (36/2) comportant un perçage central (31) et dont les zones portant les filetages sont concentriques par rapport à l'axe de rotation et constituent des éléments d'un cylindre creux, sur les surfaces intérieure et extérieure desquels les filetages (36, 38) sont ménagés.

4. Dispositif suivant l'une des revendications 2 ou 3, caractérisé par le fait que l'organe de préhension (39) est constitué par un élément relié à l'organe fileté (36/1, 36/2) et disposé concentriquement par rapport à ce dernier.

5. Dispositif suivant l'une des revendications 1 à 4, caractérisé par le fait que l'organe de préhension (39) et l'organe fileté (36) sont constitués par un seul élément.

6. Dispositif suivant l'une des revendications 1 à 5, caractérisé par le fait qu'un élément de ressort (43), recevant partiellement le poids du terminal, est disposé entre l'organe de montage (32) et l'élément de base (34).

7. Dispositif suivant l'une des revendications 1 à 6, caractérisé par le fait que l'organe de montage (32) lui-même est réalisé en tant qu'élément de support à la manière d'une colonne et comporte, pour son utilisation sans l'organe de réglage (36) ni l'élément de base (34), des organes d'encliquetage (34) situés sur son extrémité inférieure et servant à réunir de façon détachable l'organe de montage (32) à des organes de liaison d'encliquetage correspondant d'une plaque de base (45) ou d'un appareil associé au terminal.

8. Dispositif suivant l'une des revendications 1 à 7, caractérisé par le fait que sur l'organe de montage (32, 12) se trouve disposée, d'une manière détachable, une plaque de support (11) réalisée sous la forme d'une calotte et agencée de manière à pouvoir tourner et basculer et qui comporte, pour son basculement horizontal, une fente (16), dans laquelle s'engage un organe de retenue (17) associé à l'organe de montage (32, 12).

9. Dispositif suivant la revendication 8, caractérisé par le fait que la plaque de support (11) est un composant intégré du boîtier du terminal.

10. Dispositif suivant la revendication 8 ou 9, caractérisé par le fait qu'entre l'organe de retenue (17), qui s'engage à travers la fente de basculement (16) de la plaque de support (11), et cette plaque de support (11) se trouve disposé un organe coulissant (19) qui est guidé avec blocage en rotation dans des guides (18) de la plaque de support, recouvre la fente de basculement (16), reçoit de façon amovible l'organe de retenue (17) par l'intermédiaire d'une ouverture de verrouillage (20) et comporte un organe d'encliquetage élastique (21) accessible de l'extérieur à trvers la fente de basculement (16) et qui s'engage, à travers la fente de basculement (16), entre des butées (23) de l'organe de montage (32), auquel cas l'organe de raccordement (17) est agencé à la manière d'un dispositif de verrouillage à baïonnette de sorte que, pour détacher la plaque de support (11) et par conséquent le terminal (10) de l'organe de montage (32, 12), après écartement de l'organe d'encliquetage (21, 22) hors de la zone de butée (23), la plaque de support (11) peut être basculée, par actionnement à travers la fente de basculement (16), depuis une position encliquetée dans une position libérant l'organe de retenue (17) et par conséquent l'organe coulissant (19).

11. Dispositif suivant la revendication 10, caractérisé par le fait que l'organe d'encliquetage (21) est réalisé sous la forme d'une partie d'une languette d'encliquetage associée à l'organe coulissant (19).

12. Dispositif suivant l'une des revendications 10 ou 11, caractérisé par le fait que les butées (23) sont réalisées sous la forme d'organes de limitation d'une ouverture d'encliquetage semi-circulaire (23) recevant l'organe d'encliquetage (22).

13. Dispositif suivant l'une des revendications 8 à 12, caractérisé par le fait que l'organe de retenue (17) réalisé sous la forme d'un bec de retenue comporte une ouverture centrale de passage servant à recevoir la ligne (34) d'alimentation du terminal.

14. Dispositif suivant l'une des revendications 1 à 13, caractérisé par le fait que l'organe de retenue (17) comporte des butées de guidage (13) qui, lors du montage de la plaque de support (11) ainsi que du terminal (10), centrent l'organe coulissant (19) en rapport avec son ouverture de verrouillage (20).

15. Dispositif suivant l'une des revendications 1 à 14, caractérisé par le fait que tous les organes du dispositif sont constitués par des pièces en matière plastique moulée par injection.

FIG 1

FIG 2

45

44

10

FIG 3

10

36/2

31

38

37

39

FIG 4

FIG 5

FIG 6